# EUROPEAN PATENT APPLICATION

(11) **EP 1 439 594 A2**
(43) Date of publication of application: **21.07.2004**
(21) Application number: 03256188.8
(22) Date of filing: 30.09.2003
(51) Int. Cl.: H01M 8/04, F23R 3/40

(54) **A fuel cell using a catalytic combustor to exchange heat**

(30) Priority: 28.10.2002 US 282358
(71) Applicant: Hewlett-Packard Development Company, L.P., Houston, TX 77070 (US)
(72) Inventor: Kearl, Daniel A., Philomath, OR 97370 (US); Peterson, Richard B., Corvallis, OR 97330 (US); Drost, Monte Kevin, Corvallis, OR 97330 (US)
(74) Representative: Jackson, Richard Eric

(57) **Abstract**

A fuel cell preferably includes a fuel cell stack (105) for receiving reactants and conducting a reaction to produce an electrical current, a catalytic combustor (107) for combusting reactants that pass un-reacted through the fuel cell stack (105), and a heat exchanger (104) for exchanging heat from an exhaust of the catalytic combustor (107) to the reactants received by the fuel cell stack (105).

## Description

### FIELD OF THE INVENTION

The present invention relates to the field of fuel cells. More particularly, the present invention relates to a catalytic combustor used with a solid oxide fuel cell.

### BACKGROUND OF THE INVENTION

Over the past century the demand for energy has grown exponentially. With the growing demand for energy, many different energy sources have been explored and developed. One of the primary sources for energy has been, and continues to be, the combustion of hydrocarbons. However, the combustion of hydrocarbons is usually incomplete and releases both non-combustibles that contribute to smog and other pollutants in varying amounts.

As a result of the pollutants created by the combustion of hydrocarbons, the desire for cleaner energy sources has increased in more recent years. With the increased interest in cleaner energy sources, fuel cells have become more popular and more sophisticated. Research and development on fuel cells has continued to the point where many speculate that fuel cells will soon compete with the gas turbine for generating large amounts of electricity for cities, the internal combustion engine for powering automobiles, and batteries that run a variety of small and large electronics.

Fuel cells utilize an electrochemical energy conversion of hydrogen and oxygen into electricity and heat. Fuel cells are similar to batteries, but they can be "recharged" while still providing power. In many cases, it is hoped that fuel cells will be able to replace primary and secondary batteries as a portable power supply.

Fuel cells provide a DC (direct current) voltage that may be used to power motors, lights, or any number of electrical appliances. A Solid Oxide Fuel Cell (SOFC) is one type of fuel cell that is expected to be very useful in portable applications. A more detailed description of an SOFC is provided below.

Unfortunately, SOFC's generally require high temperature environments for efficient operation. The high temperature necessary for SOFC operation creates a significant lag when the fuel cell is started up. In order for an SOFC to replace a battery in functionality, an SOFC must be able to reach an elevated operating temperature rapidly.

As a result, some fuel cells have included some means for heating the cell to allow the cell to more rapidly reach an efficient operating temperature. However, most present applications for heating a fuel cell to operating temperature are inefficient and slow. Additionally, some of the present systems often make the already complex fuel cell stacks more complex and bulky by adding additional hardware, internal or external, to the SOFC stack that may only be useful during the start-up period of the fuel cell.

### SUMMARY OF THE INVENTION

In one of many possible embodiments, the present invention provides a fuel cell. The fuel cell preferably includes a fuel cell stack for receiving reactants and conducting a reaction to produce an electrical current, a catalytic combustor for combusting reactants that pass un-reacted through the fuel cell stack, and a heat exchanger for exchanging heat from an exhaust of the catalytic combustor to the reactants received by the fuel cell stack.

### BRIEF DESCRIPTION OF THE DRAWINGS

The accompanying drawings illustrate various embodiments of the present invention and are a part of the specification. Together with the following description, the drawings demonstrate and explain the principles of the present invention. The illustrated embodiments are examples of the present invention and do not limit the scope of the invention.

Fig. 1 is an illustration of a first embodiment of a rapid start-up SOFC reactor according to the present invention.

Fig. 2 is a cross-sectional view of an SOFC thermal package platelet stack according to one embodiment of the present invention.

Fig. 2a is a first illustration of a top-view of a platelet catalytic combustor according to one embodiment of the present invention.

Fig. 2b is a side-view of the platelet catalytic combustor illustrated in Fig. 2a.

Fig. 3a is an additional illustration of a top-view of a platelet catalytic combustor according to a second embodiment of the present invention.

Fig. 3b is a side-view of the platelet catalytic combustor illustrated in Fig. 3a.

Fig. 4 is a partial view of an SOFC thermal package platelet stack according to one embodiment of the present invention.

Fig. 5a is one illustration of the top-view of an SOFC thermal package platelet stack according to one embodiment of the present invention.

Fig. 5b is a side-view of the SOFC thermal package platelet stack illustrated in Fig. 5a.

Fig. 6 is a flowchart illustrating the operation of the system illustrated in Fig. 1 according to one embodiment of the present invention.

Throughout the drawings, identical reference numbers designate similar, but not necessarily identical, elements.

### DETAILED DESCRIPTION OF THE EMBODIMENTS

An overview of a standard SOFC is provided preparatory to a description of the present invention. Fuel cells are usually classified by the type of electrolyte used. The electrolyte is a specially treated dense material that conducts only ions, and does not conduct electrons. An SOFC uses a hard ceramic electrolyte and typically operates at temperatures up to about 1000 degrees C (about 1,800 degrees F).

A mixture of zirconium oxide and vittrium oxide is typically used to form a crystal lattice that becomes the solid electrolyte. Other oxide combinations have also been used as electrolytes. The solid electrolyte is coated on both sides with specialized porous electrode materials. The specialized porous materials act as a catalyst to facilitate an energy-producing reaction between oxygen and a fuel, such as hydrogen or other simple hydrocarbons.

The anode is the negative post of the fuel cell. At a high operating temperature, oxygen ions (with a negative charge) migrate through the crystal lattice of the electrolyte. When a fuel gas containing hydrogen (commonly propane, methane, or butane) is passed over the anode, a flow of negatively charged oxygen ions moves across the electrolyte to oxidize the fuel. As the fuel is oxidized, electrons are freed that are conducted by the anode as a current that can be used in an external circuit.

The oxygen is supplied, usually from air, at the cathode. The cathode is the positive post of the fuel cell and similarly, is designed to evenly distribute oxygen (usually air) to the surface of a catalyst. The cathode also conducts the electrons back from the external circuit to the catalyst.

Electrons generated at the anode travel through an external load to the cathode, completing the circuit and supplying electric power along the way. Power generation efficiencies of SOFC's can range up to about 60 percent.

In one configuration, the SOFC hardware consists of an array of tubes. Another variation includes a more conventional planar stack of cells.

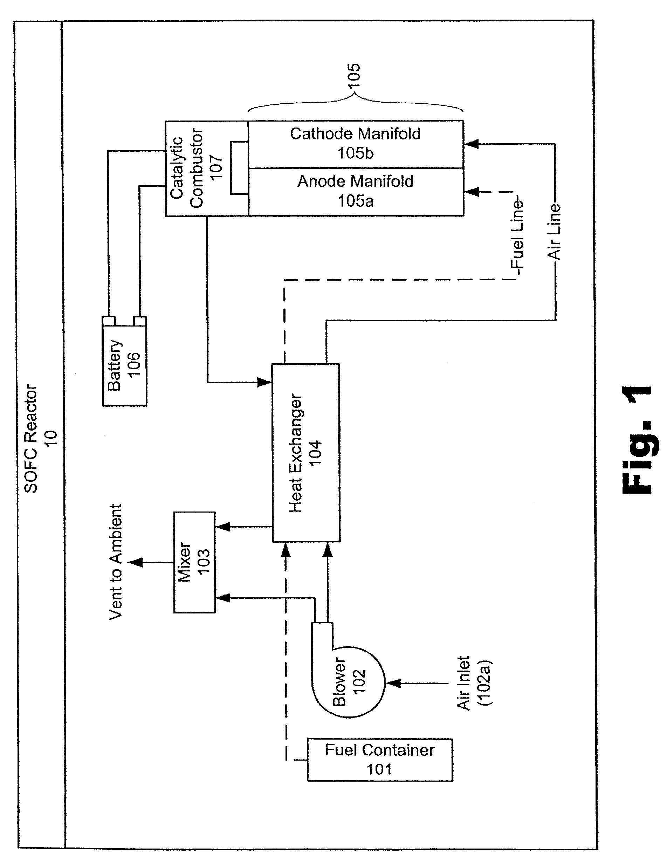

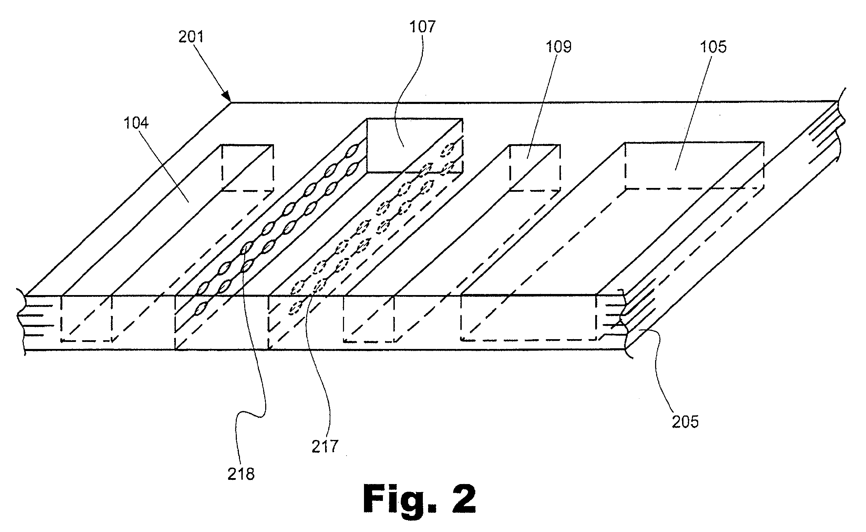

Turning now to the figures, and in particular to Fig. 1, an illustration of an SOFC reactor (10) is shown. The present invention is particularly useful for rapidly heating an SOFC stack during start-up to a minimum operational temperature hereinafter referred to as the light-off temperature.

The interconnecting solid arrows represent airlines; the interconnecting dotted arrows represent fuel lines. The fuel container (101) typically contains propane or butane. Frequently, the fuel gas held within the fuel container (101) is sufficiently pressurized to provide fuel flow through the system. A pressurized fuel container (101) is preferred in the given embodiments.

The SOFC reactor (10) may include a blower (102). The blower (102) may facilitate the fuel cell reaction by providing a steady stream of air into various elements of the system. The blower (102) may allow fresh air to enter an air inlet (102a) of the blower (102). This ambient air is then propelled into the SOFC reactor (10). The fuel from the fuel container (101) and the air provided by the blower (102) are the key reactants in an SOFC, both are typically passed into a heat exchanger (104).

The heat exchanger (104) uses heat produced by operation of the reactor (10) to heat the incoming reactants, fuel and air, to optimize their use in the reactor. The heat exchanger (104) may be any element or process that allows exhausted gases from the fuel cell reactor (10) to convey thermal energy to the incoming un-reacted air and fuel. In this way, the exothermic reactions of the SOFC reactor (10) allow energy that was previously discharged from the system to be used to more rapidly heat the SOFC reactor (10) to the necessary operational temperature without adding additional hardware.

The role of the heat exchanger (104) in allowing the SOFC reactor to reach the start-up temperature is further described below. It is important to note that the incoming un-reacted gases (air and fuel) remain separated upon exiting the heat exchanger (104).

The air and fuel gas expelled from the heat exchanger (104) are preferably heated substantially before entering an anode (105a) or cathode (105b) respectively. As shown in Fig. 1, the fuel gas is input to the anode manifold (105a), and the air is input to the cathode manifold (105b). The anode (105a) and cathode (105b) make up the power generation hardware of the SOFC reactor (10) and will hereafter be referred to as the SOFC stack (105) when referring to the power generation functionality of the anode (1 05a) and the cathode (105b) working in conjunction.

During start-up, before the stack (105) has reach the light-off temperature, the air and fuel entering the SOFC stack (105) pass through each of the anode (105a) and cathode (105b) un-reacted. Once the SOFC stack (105) has reached the light-off temperature the majority of the incoming gases are consumed in the power generation reaction of the SOFC stack (105).

As previously described the anode (105a) is the negative post of the fuel cell. Once the SOFC stack (105) reaches the light-off temperature, negatively charged oxygen ions have sufficient mobility to migrate through the crystal lattice and may be oxidized by the fuel gas. As fuel molecules are oxidized the free electrons may be conducted as a current produced in the SOFC stack (105). The current from the anode (105a) preferably passes to, and provides power for, an external load.

Oxygen is usually supplied by the air input shown entering the cathode (105b). The cathode (105b) is the positive post and is designed similar to the anode (105a) allowing the air access to the surface of a catalyst. The cathode (105b) may conduct the electrons back from the load to the catalyst. Generally the current between the anode (105a) and the cathode (105b) is sufficient to drive a load such as an electronic device consistent with present battery applications i.e. laptop, cell phone, power tool personal digital assistant (PDA), etc.

During its operation, the stack (105) will not always consume 100% of the received air and fuel gas. The catalytic combustor (107) is preferably a receptacle or element used to react any un-reacted gases from the fuel cell stack reaction. The catalytic combustor (107) may contain different inlets for receiving the un-reacted gases from the SOFC stack (105). Before the SOFC stack (105) has reached the light-off temperature all of the gases from the stack to the catalytic combustor (107) are un-reacted and remain separated as they enter the catalytic combustor (107).

The interior of the catalytic combustor (107) preferably houses a combustion chamber filled with the catalytic element. The combustion chamber is preferably formed with oxidation resistant materials and, using the catalytic element, will force a reaction between the un-reacted gasses received from the stack (105). The catalyst may take any number of forms, in one embodiment the catalyst may be an alumina pellet covered with catalyst. In a second embodiment, the catalyst may be a screen formed of the catalytic element or coated with the catalytic element. The catalyst shape used will preferably allow the incoming gases to be exposed to a maximum amount of catalyst material while simultaneously limiting the amount of volume required for the combustion chamber, and the restriction to flow created by the catalyst bed. The catalytic combustor (107) preferably mixes the un-reacted gases just as they reach the catalyst to maintain an even reaction within the combustion chamber.

The catalytic combustion chamber may also include a heating element. In order for the catalytic reaction to occur, a portion of the catalyst within the catalytic combustor (107) must reach a minimum combustion temperature, or temperature at which the catalyst reacts with the gases entering the catalytic combustor (107). As used herein and in the appended claims any device or system that allows at least a portion of the catalyst to be heated to a minimum combustion temperature will be referred to as a resistive element. Once a portion of the catalyst has reached the combustion temperature the initial reaction quickly heats the rest of catalytic combustion chamber to the combustion temperature.

A resistive element may be internal or external to the catalytic combustor (107). In some embodiments, the resistive element is composed of the catalytic material. The resistive element may be a coil within the combustion chamber of the catalytic combustor (107). The heating element may alternatively include one or more of a thin film resistor, resistive wires, or resistive strips to heat the catalytic combustor.

The two gases are passed into the combustion chamber of the catalytic combustor (107) through individual inlets wherein the gases may come in contact with the catalyst. It is important to note that the fuel distribution elements used to transfer the gases to the catalytic combustor are further described in the subsequent embodiments of the present invention. The resistive element heats a portion of the catalyst within the combustion chamber allowing the combustion to quickly and efficiently begin. The resistive element within the catalytic combustor (107) is preferably driven by a battery (106). The battery is preferably used during the SOFC start-up period for the initiation of the catalytic combustion reaction and remains inactive once the SOFC stack (105) has reached the light-off temperature.

The battery (106) preferably has a load shaving capability enabling the battery to recharge itself using a small portion of the power generated by the SOFC during off-peak power periods. Preferably, as the SOFC stack begins to produce power, the thermal energy from the reaction is sufficient to sustain the catalytic reaction without additional energy input from the battery.

As combustion occurs in the catalytic combustor (107), the reacted gases may be expelled through a series of outlet ports. At this time, all of the gases have been mixed within the combustion chamber. The remaining reacted gases may be passed to the outlet ports which preferably communicate the exhaust gases to the heat exchanger (104) where they can heat incoming un-reacted gasses as previously described.

The heat exchanger (104) preferably circulates the exhaust gases that have been heated from the exothermic combustion reaction of the catalytic combustor (107) through the heat exchanger (104) to transfer heat to the un-reacted air and fuel. Similarly, as the SOFC stack (105) begins to produce power the gases expelled to the catalytic combustor (107) become hotter and hotter and they too contribute to the heat exchange that occurs in the heat exchanger (104) after the catalytic reaction has taken place.

In this way, the heat gain resulting from the catalytic combustor (107) not only serves to react any un-reacted fuels before they are ejected into the environment, it also helps to heat the incoming air and fuel to the light-off temperature so that the fuel cell can much more quickly reach operational temperatures with the reaction in the stack (105) becoming self-sustaining and efficient.

After exiting the heat exchanger (104), the exhaust gases are passed to a mixer (103) where they are mixed with additional air from the blower (102) in order to cool the gases before they are released into the ambient environment.

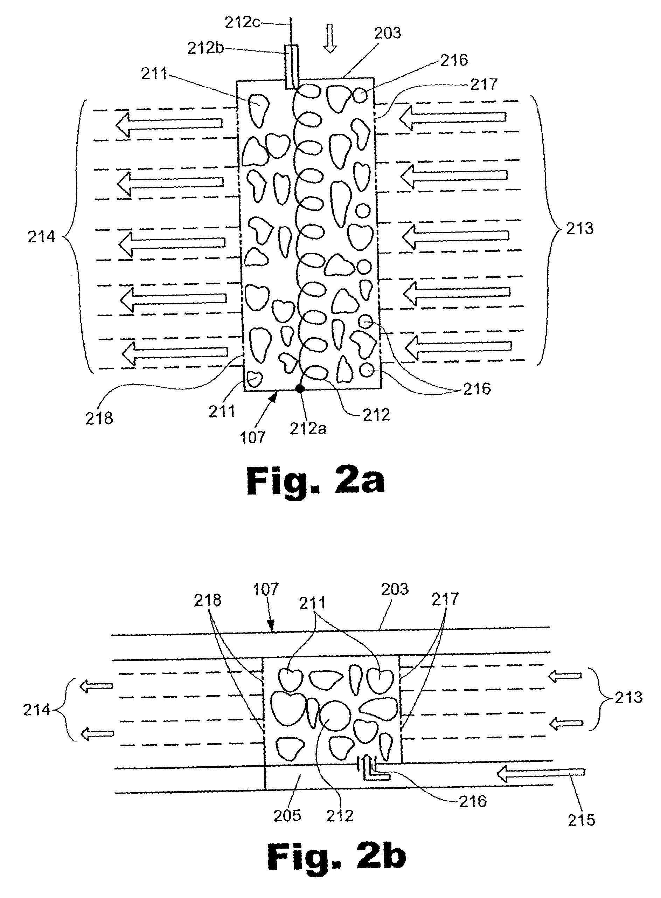

Fig. 2 is a cross-sectional view of an SOFC thermal package platelet stack (201) according to one embodiment of the present invention. As used herein and in the appended claims, a platelet is a relatively thin layer of material adapted for use in an SOFC. Each platelet may be manufactured differently in order to properly house the SOFC components. For example, the bottom layer of the platelet will preferably be manufactured as an outer housing for the stack (201) and the SOFC components housed in the stack (201). The inner platelet layers preferably have locations within that are hollowed out to allow the formation of flow conduits, manifolding, heat exchanging features and to securely place SOFC components within the SOFC thermal package platelet stack (201 ).

It is important to note that the elements shown are not limited in size in any dimension. The elements house in the platelet stack (201) may be any size or dimensions as best suited for a particular application. The platelets stack (201) is preferably etched, punched, or surface machined in order to provide space to enclose many or all of the elements described in Fig. 1.

As shown in Fig. 2, the SOFC stack (105), the heat exchanger (104) and the catalytic combustor (107) are preferably enclosed in the platelet stack (201). This seals the gases and heat necessary to power the reaction inside the platelet stack (201).

The SOFC thermal package platelet stack (201) preferably also includes an air/fuel distribution element (109). The air/fuel distribution element (109) preferably receives the exhausted gases from the fuel cell stack (105) that may be input in to the catalytic combustor (107). The air/fuel distribution element (109) preferably maintains isolation between the air and fuel going to the catalytic combustor (107). The distribution element (109) is preferably formed in the platelet stack (201) by grooves or etching that act as a pipe or fuel line for allowing each of the aforementioned gases to enter the catalytic combustor (107). The various platelet layers available facilitate the use of complicated gas distribution channels such as the air (217) and fuel inlets.

The catalytic combustor (107) includes multiple air inlets (217) at the point where the air used by the catalytic combustor makes contact with the combustor (107). Also shown are the exhaust outlets (218) of the catalytic combustor (107). The air inlets (217) and the exhaust outlets (218) are preferably sized so that the incoming and outgoing gases do not create a significant pressure drop environment within the catalytic combustor (107) and/or fuel cell stack (105).

The heat exchanger (104) is preferably adjacent to the catalytic combustor (107). The heat exchanger (104) may also be located relatively close to the fuel cell stack (105) within the platelet stack (201) in order to efficiently recirculate the energy gained in the exothermic reaction of the catalytic combustor.

The fuel released from the SOFC stack to the air/fuel distribution element (109) and then to the catalytic combustor may be fed through the bottommost layer of the SOFC thermal package platelet stack (201) hereinafter referred to as the fuel layer (205). The fuel layer (205) may be separated in order to improve safety as the un-reacted fuel elements in the exhaust of the SOFC stack (105) are propagated to the catalytic combustor (107). Electrical and sensor connections to the SOFC stack (105) may also be embedded in the fuel layer (205) or other platelet layers as needed.

Fig. 2a is a top-view of the catalytic combustor (107). The catalytic combustor (107) preferably has a heat tolerant housing. The heat tolerant housing will be referred to herein as a combustion chamber (203). The combustion chamber (203) preferably holds the gases vented into the chamber during the SOFC operation and withstands the high temperatures common in a combustion reaction.

The catalytic combustor (107) is preferably substantially filled with a catalyst (211). The structure of the catalyst (211) may take many forms. For example, the catalyst may be catalyst coated ceramic beads, ceramic honeycombs, a simple planar surface catalyst, a labyrinth of catalyst-coated planar surfaces, or catalyst-coated ceramic wool, ceramic fabric, laminated micro-channel arrays, or screens. In the present embodiment, the catalyst (211) is preferably in the form of a small diameter porous alumina beads covered with catalyst material preferably sized such that they may not exit the combustion chamber (203) through the various gas inlets or outlets (217, 218).

Fig. 2a illustrates a coil shaped resistive element (212). Preferably, the resistive element is positioned such that it can heat a portion of the catalytic element (211) to facilitate the combustion reaction. In one embodiment, the catalyst (211) and the resistive element (212) may be integrated so that the resistive element (212) is formed out of a catalyst or catalyst-coated material thereby allowing the catalyst to be rapidly heated to the combustion temperature.

One end of the resistive element (212) is connected to a current source (212c). The current source (212c) is preferably a battery that allows the resistive element (212) to be heated. As described above, heat from the resistive element (212) heats the combustor (107) so that the catalytic combustion reaction of a portable SOFC reactor can be started more quickly and efficiently, and without adding further hardware or excessive weight. Temperature sensors and instrumentation, such as oxygen and fuel sensors, may also be included in the catalytic combustor feedback loop to facilitate control over the light-off event.

The end of the heating coil (212) opposite the current source (212c) may be connected to a ground (212a). In one embodiment, the ground (212a) may be a spot weld to the grounded combustion chamber (203) wall. Additionally, the ground (212a) may be a connection from the resistive element (212) to any grounded element.

Preferably, the resistive element (212), current source (212c), and ground (212a) allow current to be passed through the resistive element (212). The high resistance of the resistive element (212) then causes the resistive element (212) to heat substantially.

The resistive element (212) may be mounted in the containment chamber (203) such that it will not move relative to the catalytic combustor (107). The upper portion of the resistive element (212) that enters the combustion chamber (203) is preferably insulated (212b) so that the resistive element (212) does not short with the combustion chamber (203) wall.

The catalytic combustor (107) receives the exhausted air through the air channels (213). The air enters the combustion chamber (107) from the air channels (213) through air inlets (217). Similarly, the fuel gas enters the catalytic combustion chamber (107) through fuel inlets (216) fed from fuel channels (not shown). In the present invention the fuel inlets (216) may be mounted in the bottom of the combustion chamber (203) so that the fuel enters from the bottom of the combustion chamber (203). The through-cut geometries created for the fuel channels (216) and air channels (213) are routed through the various levels of the platelets used to create the catalytic combustor (107).

Once the un-reacted elements from the SOFC stack have been reacted in the catalytic combustor they are expelled through the exhaust outlets (218). Preferably, there are sufficient outlets that the interior of the catalytic combustor (107) does not reach an excessive pressure, or that an impediment to the flowing gases is created. The exhaust gases may be transferred away from the catalytic combustor (107) by multiple exhaust channels (214).

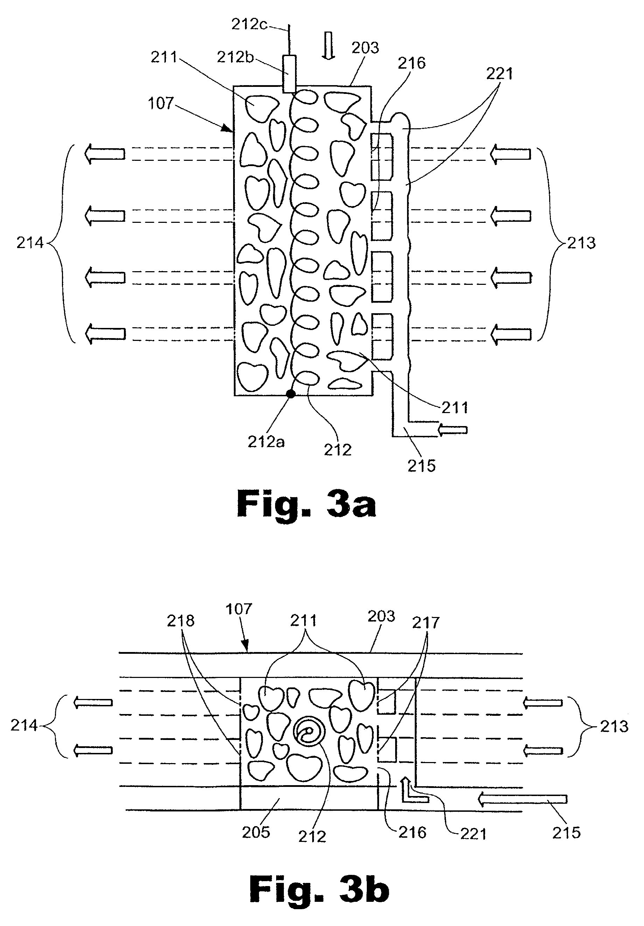

Fig. 2b is a side-view of Fig. 2a. Figs. 2b, 3a, and 3b contain elements that are similar to those of Figs. 2 and 2a. Therefore, a redundant explanation of the catalytic combustor (107) elements described in Figs 2 and 2a will be omitted in describing Fig. 2b, 3a, and 3b. As shown in Fig. 2b, the catalyst elements (211) within the combustion chamber (107) are preferably loosely packed. This allows the un-reacted gases to permeate the entire combustion chamber (203) in order to reach and react with a maximum amount of surface area of the catalyst elements (211). Additionally, an un-compacted chamber allows the gases to flow through the catalytic combustor (107) without excessive pressure increases.

The air channels (213) enter the combustion chamber (203) on different layers. It is important to note that the catalytic combustor (107) is not limited to any number of specific platelet layers. The bottom layer platelet may be designated as the fuel transportation platelet (205). As shown, a fuel channel (215) may transfer the un-reacted fuel from the SOFC stack to the catalytic combustor (107). Once the fuel has reached the catalytic combustor (107) the fuel may enter the combustion chamber (203) through a fuel inlet (216).

Fig. 3a is a top-view of a second embodiment of the catalytic combustor (107) of the present invention

Fig. 3a shows a catalytic combustor (107) and combustion chamber (203). The fuel inlets (216) may be positioned such that they enter the combustion chamber (203) on the same wall as the air inlets (217). This allows the gases to more effectively mix as they are exposed to the catalyst and combustion occurs. A vertical feeding structure (221) may be necessary in order to feed the various levels of fuel inlets (216) from the bottom platelet designated for fuel transfer. As used herein and in the appended claims, any element that may be used to transfer gases vertically will be referred to as a vertical feeding structure (221). Additionally, each vertically feeding structure (221) may be connected allowing a single fuel channel (215) to feed multiple fuel inlets (216).

Fig. 3b is a side-view of Fig. 3a according to one embodiment of the present invention. The elements unique to Fig. 3a may be better understood by examining Fig. 3b.

As shown, the incoming fuel channel (215) may travel parallel to the air channels (213) in the fuel layer (205). This configuration may allow a single fuel channel (215) to feed the catalytic combustor (107) while still separating the fuel substantially for reaction with the catalyst (211). In another embodiment, the fuel channel (215) may be perpendicular to the air channels (213).

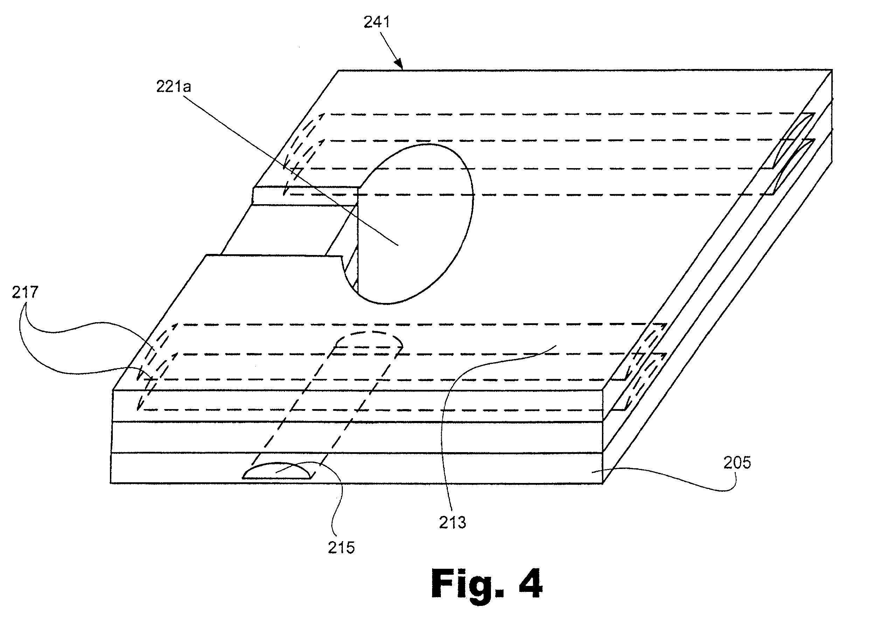

Fig. 4 is a partial-view of a platelet fuel cell stack (241) according to one embodiment of the present invention. Shown near the center of the stack is a space (221 a) designed to accommodate a vertical feeding structure. This may allow the vertical feed structure (not shown) to rise vertically interfacing with each platelet in the stack that may have a fuel outlet.

Additionally, the air channels (213) for each level are shown as they extend through the platelet stack (241) and connect with the catalytic combustor through the air inlets (217). In the present embodiment, the fuel channel (215) may run perpendicular in direction to the air channels (213) shown. As previously described, the fuel delivery channel (215) is preferably located in the fuel layer (205) of the platelet fuel cell stack (241).

The various layers available within the platelet stack (241) allows the air and fuel channels to be distributed in complicated geometries. The combination of the through-cut geometries and various platelet layers facilitates the even distribution of the reactive elements through the vertical feeding structures and other fuel inlets entering the catalytic combustor.

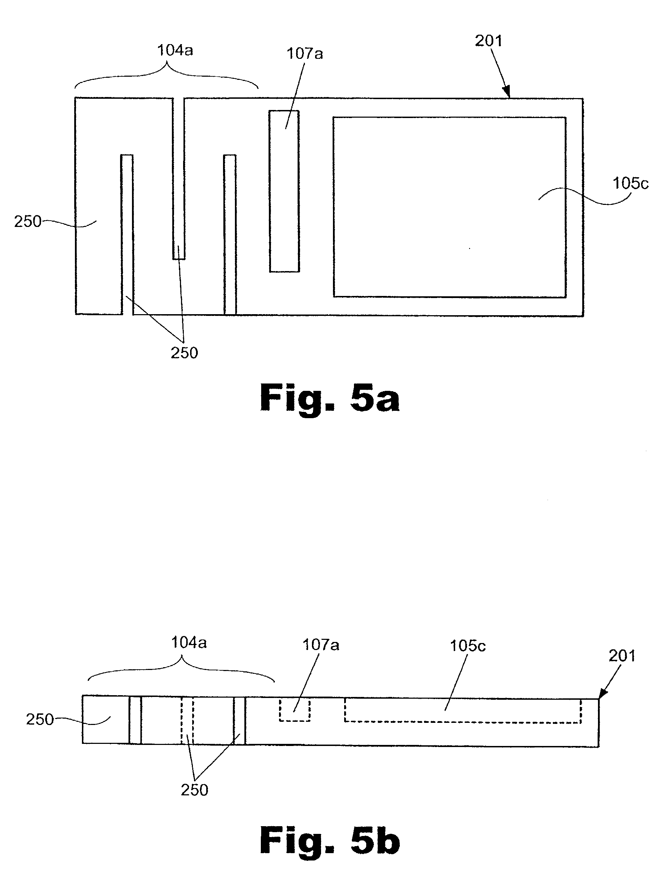

Fig. 5a is a top view of another embodiment of an SOFC thermal package platelet stack (201). The SOFC thermal package platelet stack (201) shown in Fig. 5a may include an SOFC containment area (105c) for housing the SOFC stack. Similarly, the SOFC thermal package platelet stack (201) may have a catalytic combustor containment area (107a). Each of the aforementioned containment areas allows the exothermic reaction and necessary reactants to be sealed within the SOFC thermal package platelet stack (201). The heat exchanger (104a) includes passageways (250). Fig. 5b is a side view of the SOFC platelet of Fig. 5a.

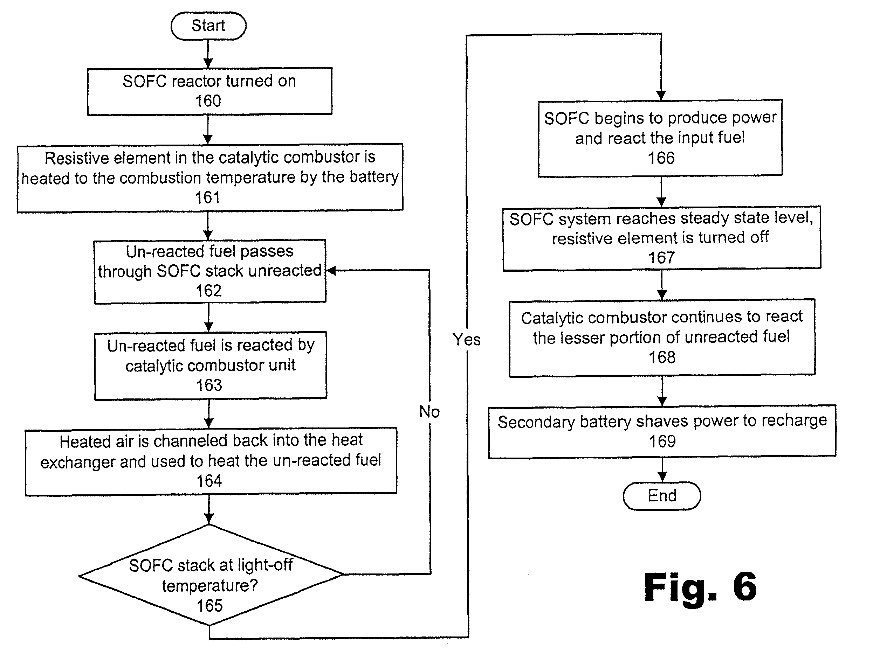

Fig. 6 is a flowchart illustrating the rapid start-up operation of the system illustrated in Fig. 1 according to an embodiment of the present invention.

The process begins as the SOFC reactor is turned on (160). As discussed above, the SOFC stack must reach an elevated temperature before the power generation reaction may begin. in many cases the temperature will need to exceed 400 °C before the fuel cell reaches the light-off temperature. Preferably a battery and resistive element will heat the catalyst within the catalytic combustor to the temperature necessary for combustion (161). The fuel may then be turned on, at which time it will pass through the SOFC stack un-reacted (162) because the SOFC is not at the light-off temperature.

The un-reacted fuel passed into the catalytic combustor will be reacted (163) due to the heating of the catalytic combustor (161). The exothermic combustion reaction will heat the gases vented from the catalytic combustor substantially. At that time, the exhaust gases from the catalytic combustor will preferably pass in to the heat exchanger where the exhaust gases may be used to heat the un-reacted gases going in to the SOFC stack (164). This will heat the SOFC stack to the light-off temperature.

Preferably, each element of the SOFC reactor will have temperature, fuel, and other sensors that may help provide feedback to the overall system. For example, if the temperature sensors indicate that the SOFC stack has not reached the light-off temperature (165), the fuel continues to pass through the SOFC un-reacted and the process continues as previously described until the heat re-circulated through the heat exchanger is sufficient that the SOFC stack reaches the light-off temperature (165). At that point, the SOFC may begin to produce power and react the incoming fuel (166). A feedback loop can be implemented to control this process as the catalytic combustor and SOFC stack are heated to the light-off temperature.

The SOFC reaction may soon cause the heat to increase causing the SOFC to reach a steady state operating condition. At that time, the battery to the resistive element of the catalytic combustor may be turned off (167). The steady state operating condition is assumed to be a point during the SOFC process where a maximum amount of fuel is being consumed by the reaction. In some embodiments, efficiency is expected to reach 85% with only 15% of the fuel entering the stack being passed un-reacted in to the catalytic combustor.

As the lesser portion of the un-reacted fuel is passed in to the catalytic combustor, the fuel continues to be reacted (168) to maintain the temperatures necessary for the SOFC reaction and in order to react the fuel before it is vented into the ambient. After the SOFC reactor has reached maximum efficiency, the battery may begin to shave power to recharge itself for the next time the SOFC reactor is started (169). Preferably the battery will only shave power from the SOFC reaction until it is fully recharged.

The preceding description has been presented only to illustrate and describe the invention. It is not intended to be exhaustive or to limit the invention to any precise form disclosed. Many modifications and variations are possible in light of the above teaching.

The illustrated embodiments were chosen and described in order to best illustrate the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A fuel cell comprising:
a fuel cell stack (105) for receiving reactants and conducting a reaction to produce an electrical current;
a catalytic combustor (107) for combusting reactants that pass un-reacted through said fuel cell stack (105); and
a heat exchanger (104) for exchanging heat from an exhaust of said catalytic combustor (107) to the reactants received by said fuel cell stack (105).

2. The fuel cell of claim 1, wherein the reactants are fuel and air received by said fuel cell stack (105).

3. The fuel cell of claim 1, further comprising a heating element for heating said catalytic combustor (107) and reactants in said catalytic combustor (107).

4. The fuel cell of claim 1, wherein said fuel cell is a solid oxide fuel cell and said fuel cell stack (105) is a solid oxide fuel cell stack.

5. A method of providing a rapid start-up system for a Solid Oxide Fuel Cell (SOFC), said method comprising;
heating a catalyst in a catalytic combustor unit (107);
combusting un-reacted gases leaving a fuel cell stack (105) with said catalytic combustor unit (107); and
exchanging heat created by said combusting said un-reacted gases into reactants entering said fuel cell stack (105).

6. The method of claim 5, wherein said heating a catalyst comprises running a current through a resistive element (212).

7. A method of forming a rapid start-up system for a fuel cell, said method comprising:
placing a catalytic combustor (107) in series with a fuel cell stack (105) such that, during operation of said fuel cell, un-reacted reactants from said fuel cell stack (105) enter said catalytic combustor (107); and
connecting a heat exchanger (104) to an exhaust of the catalytic combustor (107) and an intake of said fuel cell stack (105), such that, during operation of said fuel cell, heat from said exhaust of the catalytic combustor (107) heats said intake of said fuel cell stack (105).

8. A catalytic combustor (107) comprising:
an insulated chamber;
a catalyst in said insulated chamber; and
a heating element for heating said chamber and catalyst to a reaction temperature.

9. The catalytic combustor (107) of claim 8, wherein said catalytic combustor (107) is an integral part of a fuel cell stack (105).

10. The catalytic combustor (107) of claim 8, wherein said insulated chamber comprises an oxidation resistant material.
